# EUROPÄISCHE PATENTSCHRIFT

(11) **EP 0 487 765 B1**
(45) Veröffentlichungstag und Bekanntmachung des Hinweises auf die Patenterteilung: **15.03.1995**
(21) Anmeldenummer: 90122655.5
(22) Anmeldetag: 27.11.1990
(51) Int. Cl.: B65D 85/78

(54) **Quetschbehälter für Speiseeis**
Squeezable container for ice-cream
Récipient compressible pour crème glacée

(43) Veröffentlichungstag der Anmeldung: 03.06.1992
(73) Patentinhaber: SEDA S.p.A., I-80022 Arzano NA (IT)
(72) Erfinder: D'Amato, Antonio, Dr. c/o Seda S.p.A., I-80022 Arzano (Napoli) (IT)
(74) Vertreter: Grünecker, Kinkeldey, Stockmair & Schwanhäusser Anwaltssozietät

(56) Entgegenhaltungen:
- EP-A- 0 074 936

## Beschreibung

Die Erfindung bezieht sich auf einen quetschbaren Behälter für Speiseeis, insbesondere Wassereis mit einem V-artig, sich von einer Behälteröffnung nach unten verjüngenden Körper, dessen quetschbare Körperwand aus flexiblem, dennoch steifen Werkstoff besteht und zur Bildung eines unteren Körperendes zu einer ebenen Griffplatte geformt ist.

Ein Behälter der ebengenannten Art ist aus dem europäischen Patent 74 936 bekannt. Der Behälter hat sich in der Praxis millionenfach bewährt. Er dient zur Aufnahme von Wassereis, das bei der Befüllung von oben flüssig über die Körperöffnung in den Behälter eingeführt wird. Es erstarrt darin bei entsprechender Kühlung. Die Körperöffnung wird mit einem Deckel verschlossen.

Will der Konsument das Speiseeis verzehren, so wird nach dem Entfernen des Deckels der Quetschbehälter ergriffen. Die Hand erwärmt den Behälter, die Körperwand leitet die Wärme an das durchgefrorene Wassereis weiter, worauf sich an der Grenzschicht zwischen Körperwand und Speiseeis eine schmelzende Gleitschicht ergibt. Da sowohl der Behälter als auch das darin befindliche Wassereis konisch nach unten verlaufen wird das Wassereis nach oben weggeschoben, wenn man von außen auf den Quetschbehälter drückt. Dies erleichtert den Verzehr, da hierfür das Eisstück mit seinem oberen Ende über das obere Körperende hinausgeschoben werden kann. Verringert man den Druck auf die Körperwand so gleitet das Eisstück wieder in den Behälter zurück.

Der bekannte Quetschbehälter hat eine Konizität, die bei plattgedrücktem Körper in einem V-Winkel von 6° bis 7° zum Ausdruck kommt. Dieser V-Winkel ermöglicht ein leichtes Ausschieben des Eisstückes. Bei unachtsamen Konsumenten kann das Eisstück jedoch zu schnell aus dem Behälter gedrückt werden.

Der Erfindung liegt die Aufgabe zugrunde, den vorbekannten Quetschbehälter in seinem Aufbau und seiner Funktion zu verbessern.

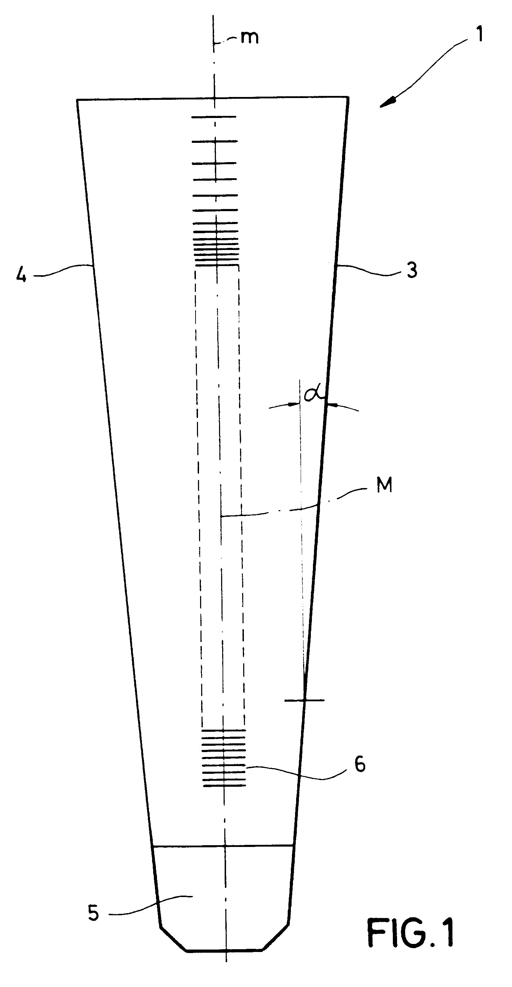

Diese Aufgabe wird erfindungsgemäß dadurch gelöst, daß der Körper einen V-Winkel α von 5° zur Körpermittenachse aufweist (Messung des V-Winkels bei plattgedrückten Körper, wie in Figur 1 angegeben) und entlang einer sich in Körperlängsrichtung erstreckenden Mantellinie eine Riffelung angeordnet ist, deren Nuten quer zur Mantellinie verlaufen.

Der erfindungsgemäße Quetschbehälter ist einfach aufgebaut, er erfüllt sich einander widersprechende Zielrichtungen.

Um das unerwünschte, vorschnelle Herausschieben des Eisstückes aus dem Quetschbehälter zu verhindern, wäre es an sich geboten gewesen, den V-Winkel α zu vergrößern. Hierdurch kann man nämlich den Vorschub verringern, da bei größerer Konizität und gleicher Quetschkraft der nach oben gerichtete Vorschubweg des Eisstückes geringer wird.

Bei der Erfindung wird jedoch der V-Winkel nicht vergrößert, sondern im Gegenteil verkleinert, wodurch sich das Problem des vorschnellen Herausschieben des Wassereisstückes vergrößert.

Überraschenderweise hat es sich jedoch herausgestellt, daß bei einem V-Winkel von 5° ein Optimum gegeben ist. Bei diesem Winkel steht beim Ausdrücken des Eisstückes der Vorschub in einem ausgewogenen Verhältnis zu den zwischen Eisstück und Körperwand wirkenden Bremskräften. Dieses Optimum ist physikalisch nicht leicht erklärbar. Es mag sein, daß bei diesem V-Winkel die von der Schmelzschicht herrührenden, zwischen dem Eisstück und der Behälterwand wirkenden Adhäsionskräfte so groß sind, daß trotz des gegenüber dem Stand der Technik verringerten V-Winkels derartige Bremskräfte wirken, daß das unerwünschte schnelle Ausschieben des Eisstückes behindert wird.

In diesem Sinne wirkt auch die vorzugsweise entlang einer Mantellinie angeordnete Riffelung. Sie kann an der Innenseite und/oder Außenseite des Behälters angeordnet sein. Innen erhöht sie die Reibung zwischen Eisstück und Körperwand. Außen bildet sie eine Reibfläche für die Finger, insbesondere den Daumen des Benutzers. Beim Zusammenquetschen des Behälters wird ein Abrutschen des Fingers verhindert, wodurch der Quetschdruck auf den Behälter genauer dosiert werden kann. Die Riffelung hat also eine Doppelfunktion.

Da das Speiseeis während der Befüllung des Quetschbehälters flüssig eingefüllt wird und erst danach erstarrt, überträgt sich die in der Körperwand enthaltene Riffelung auf die Außenseite des Eisstückes. Das Eisstück und die Körperwand verzahnen sich etwas in dem Bereich der Riffelung wodurch ein gewisser Ausschiebewiderstand erzeugt wird. Er ermöglicht das kontrollierte Ausschieben des Eisstückes je nach angewandter Quetschkraft des Konsumenten.

Bei einer vorteilhaften Weiterbildung der Erfindung erstreckt sich die Riffelung von der Griffplatte bis zur Körperöffnung, wobei die Nuttiefe sich in Richtung auf die Körperöffnung reduzieren kann. Durch diese Reduktion will man im Bereich der Körperöffnung die Reibhaftung verringern. Das Eisstück kann sich bei Beginn des Ausschiebevorganges dort vom Behälter als erstes lösen. Der Ausschiebevorgang wird dadurch noch einfacher kontrollierbar.

Besteht der Körper aus einem gerollten, in einem Verbindungsbereich sich überlappenden Zuschnitt, so ist es günstig, wenn die Riffelung sich in dem Verbindungsbereich befindet. Auf diese Weise erreicht man nicht nur die vorgenannten Effekte wie Reibhaftung an der Innenseite, Griffhaftung an der Außenseite, sondern auch noch eine innige Verbindung der überlappenden Wandabschnitte. Die Riffelung erfüllt hier gleichzeitig mehrere Funktionen.

Um die Haftung zwischen Eisstück einerseits und Körperwand andererseits zu erhöhen, beziehungsweise das vorschnelle Aufbauen der Schmelzschicht zu verzögern, ist es vorteilhaft, wenn an der Innenseite der Körperwand sich eine Rasterung befindet. Die Rasterung kann dergestalt ausgebildet sein, daß sie die Form von nach innen ragende Rastelemente zum Beispiel Noppen umfaßt. Diese Noppen ragen in das Eisstück hinein, bilden also einen gewissen Formschluß mit dem Eisstück. Die Rastelemente können als nach innen ragende Erhöhungen aus einem Vollmaterial bestehen, das zum Beispiel an die Innenseite der Körperwand aufgeklebt ist. Sie können aber auch einen Teil der Körperwand bilden, in dem sie nach innen ragende Ausbuchtungen derselben darstellen.

Insbesondere bei der letzten Ausführungsform ergibt sich bei dem Erwärmen des Körpers zur Bildung der Schmelzschicht der Vorteil, daß im Bereich der Ausbuchtungen der Schmelzvorgang langsamer erfolgt, da der Hohlraum der Ausbuchtung ein isolierendes Luftpolster enthält, das die Wärmezufuhr der Hand etwas verzögert. Die Schmelzschicht bildet sich bei den Ausbuchtungen im Vergleich zur Umgebung langsamer, wodurch das Ausschieben besser regulierbar ist.

Für die Handhabung des Quetschbehälters mag es Vorteile bieten wenigstens die der Riffelung gegenüberliegende Innenseite der Körperwand glatt zu halten. Wenn man den Quetschkörper ergreift um das Eisstück auszuschieben, hat man die Möglichkeit mit einem Teil der Hand auf die Riffelung zu drücken und mit dem anderen Teil auf die gegenüberliegende glatte Innenseite. Durch die Benutzung der Riffelung kann man das Ausschieben verzögern. Drückt man jedoch seitlich von der Riffelung auf die Körperwand und damit auf das Eisstück, so reduziert man die Reibhaftung und das Eisstück wird auf Wunsch beschleunigt ausgeschoben.

Zu guter Letzt ist es möglich, die Rastelemente nach der Art eines Sägezahnprofiles auszubilden, um zwar das Ausschieben des Eisstückes zu ermöglichen, das Zurückgleiten aber zu behindern.

Nachfolgend wird ein Ausführungsbeispiel der Erfindung anhand einer Zeichnung beschrieben.

Es zeigen:
- Fig.1: eine Seitenansicht auf einen plattgedrückten Behälter mit der Angabe des Winkels α,
- Fig.2: die Seitenansicht des Quetschbehälters von Fig. 1, jedoch in dreidimensionaler Gestalt und gefüllt mit einem Wassereisstück,
- Fig.3: eine andere Seitenansicht des Quetschbehälters von Fig. 2 und
- Fig.4: einen Schnitt durch den leeren Behälter von Fig. 2 gemäß der Linie IV-IV.

Der erfindungsgemäße Quetschbehälter 1 dient zur Aufnahme von Speiseeis, insbesondere Wassereis.

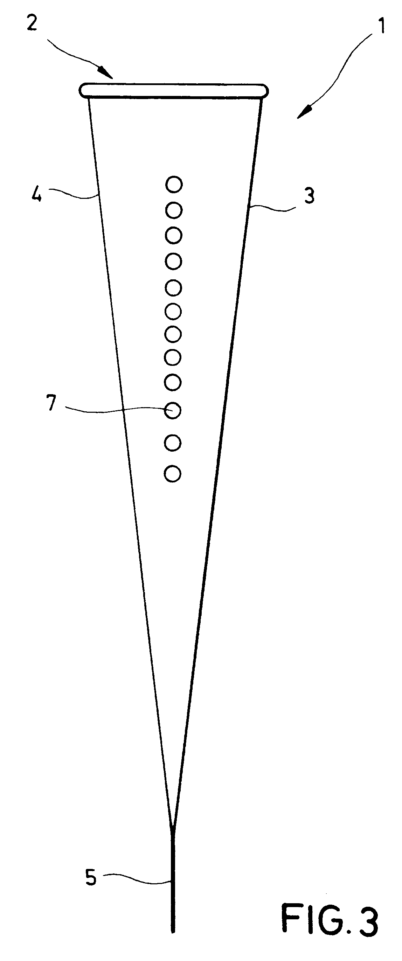

Den Fig. 1 und 3 ist unschwer zu entnehmen, daß er einen V-artig, sich von einer Behälteröffnung 2 nach unten verjüngenden Körper 3 aufweist. Die quetschbare Körperwand 4 besteht aus flexiblem, dennoch steifen Werkstoff, zum Beispiel wasserfestem Papier, Karton oder Kunststoff.

Die Körperöffnung befindet sich während der Benutzung des Behälters jeweils oben, sie ist oval oder vorzugsweise kreisrund ausgebildet und kann mit einem nicht gezeigten Deckel abgeschlossen werden.

Der Körper 3 verjüngt sich nach unten hin und zeigt an seinem unteren Körperende als Abschluß eine ebene Griffplatte 5, die sowohl zum Halten des Behälters dient als auch als Handhabe beim Ausschieben des Speiseeises.

In Fig. 1 ist der an sich dreidimensionale Körper plattgedrückt, also zweidimensional dargestellt. Die Abbildung dient zur Darstellung des V-Winkels α, der bei der Erfindung 5° beträgt.

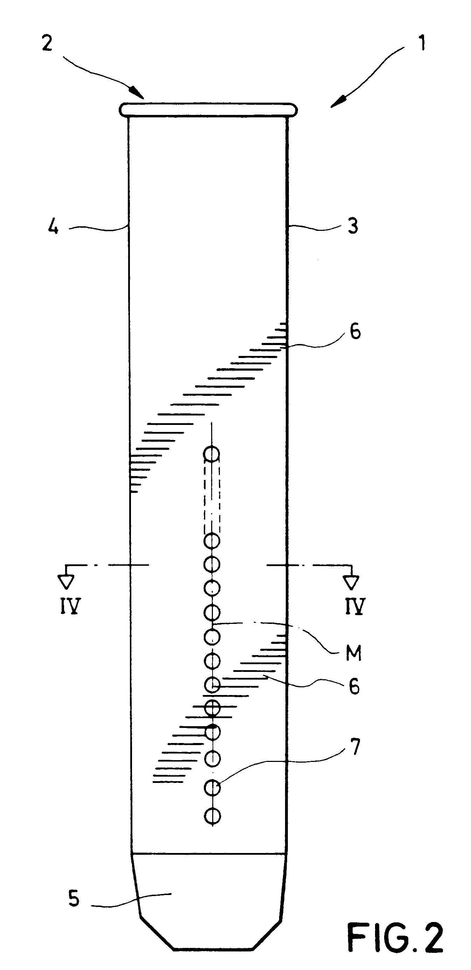

Die beiden Körperenden geben die Gestalt des Quetschbehälters vor. Die ovale oder kreisrunde Körperöffnung 2 bestimmt das obere Ende, die ebene Griffplatte 5 das untere Ende, dazwischen erstreckt sich die Körperwand 4. Ausgehend von der Körperöffnung 2 gestaltet sich der Behälterquerschnitt zu einer stets flacher werdenden Ellipse je weiter man den Schnitt von oben nach unten legt. Die Konizität des Quetschbehälters ergibt sich insbesondere aus den Figuren 1 und 3. Selbst bei den in Fig. 2 gezeigten seitlichen Mantellinien des Behälters ist bei dem gewählten V-Winkel von α = 5° noch eine gewisse Konizität festzustellen, wenngleich sie zeichnerisch nicht zum Ausdruck kommt.

Die Fig. 1 zeigt, daß der Körper entlang einer sich in Körperlängsrichtung erstreckenden Mantellinie M eine Riffelung 6 aufweist, deren Nuten quer zur Mantellinie M verlaufen. Im gezeigten Fall ist die Riffelung nur an der Außenseite der Körperwand 4 angeordnet. Sie erstreckt sich im wesentlichen von der Griffplatte 5 bis zur Körperöffnung 2. Die Riffelung nimmt in ihrer Nuttiefe in Richtung auf die Körperöffnung ab. Gleichermaßen vergrößert sich der Abstand zwischen den Nuten in einem der Körperöffnung näheren Auslaufbereich.

Bei Verwendung von Papier, Karton usw. kann der Körper aus einem gerollten, in einem Verbindungsbereich sich überlappenden Zuschnitt bestehen. In diesem Fall kann die Riffelung sich über den Verbindungsbereich erstrecken. Je nach Wunsch kann die Riffelung nur an der Außen- oder auch an der Innenseite des Körpers gestaltet sein. An der Außenseite dient sie zur Verbesserung der Griffhaftung für die Hand, an der Innenseite vermag sie den Reibwert zu erhöhen um ein gezieltes und abgebremstes Ausschieben des Eisstückes nach oben zu gewährleisten.

An der Innenseite der Körperwand 4 kann eine Rasterung 7 angeordnet sein. Die Rasterung kann mannigfaltige Rastelemente aufweisen, z.B. nach innen ragende Noppen in Form von Halbkugeln, Walzen, Quadern, Kegeln, Kegelstümpfen usw.. Die Rasterung kann sich, wie in Fig. 2 gezeigt, auf einer Mantellinie M des Körpers 3 befinden oder über die Wand verstreut sein. Die Rasterung 7 kann sich auch im Verbindungsbereich des Zuschnittes befinden. Sie kann auch zusätzlich zur Riffelung 6 in der Körperwand vorhanden sein und zwar auch überlappend.

Die Fig. 2 zeigt einen solchen Fall, bei der eine auf einer willkürlichen Kurve angeordnete Riffelung 6 mit horizontalen Nuten sich mit einer auf einer Mantellinie M erstreckende Rasterung überdeckt.

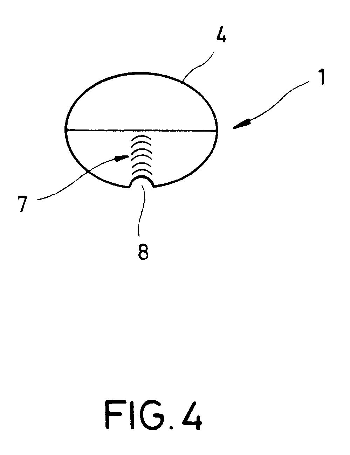

Die Fig. 4 zeigt einen Horizontalschnitt durch den Quetschbehälter 1. Es ist zu erkennen, daß das halbkugelige Rastelement 8 als nach innen ragende Ausbuchtung der Körperwand gestaltet ist.

Die Rastelemente können auch z.B. in Form eines Widerhakens gestaltet sein, der -um den Formwiderstand zu erhöhen- nach unten zur Griffplatte hin orientiert ist. Hierdurch ergibt sich ein Sägezahnprofil, das ähnlich wie die vorgenannte Riffelung an der Innenseite und die Rasterung als Ausschubbremse wirkt.

## Patentansprüche

1. Quetschbarer Behälter für Speiseeis, insbesondere Wassereis, mit einem V-artig, sich von einer Behälteröffnung nach unten verjüngenden Körper, dessen quetschbare Körperwand aus flexiblem, dennoch steifen Werkstoff besteht und zur Bildung eines unteren Körperendes zu einer ebenen Griffplatte geformt ist,
**dadurch gekennzeichnet**,
daß der Körper (3 ) einen V-Winkel α von 5° zur Körpermittenachse (m) aufweist und entlang einer sich in Körperlängsrichtung erstreckenden Mantellinie (M) eine Riffelung (6) angeordnet ist, deren Nuten quer zur Mantellinie (M) verlaufen.

2. Behälter nach Anspruch 1,
**dadurch gekennzeichnet,**
daß die Riffelung (6) an der Außenseite und/oder Innenseite der Körperwand (4) angeordnet ist.

3. Behälter nach Anspruch 1 oder 2,
**dadurch gekennzeichnet,**
daß die Riffelung (6) sich von der Griffplatte (5) bis zur Körperöffnung (2) erstreckt.

4. Behälter nach einem der Anspüche 1 bis 3,
**dadurch gekennzeichnet,**
daß die Riffelung (6) in ihrer Nuttiefe in Richtung auf die Körperöffnung (2) abnimmt.

5. Behälter nach einem der vorhergehenden Ansprüche,
**dadurch gekennzeichnet,**
daß der Körper (3) aus einem gerollten, in einem Verbindungsbereich sich überlappenden Zuschnitt besteht und die Riffelung (6) im Verbindungsbereich befindet.

6. Behälter nach einem der vorhergehenden Ansprüche,
**dadurch gekennzeichnet,**
daß sich an der Innenseite der Körperwand (4) eine Rasterung (7) befindet.

7. Behälter nach einem der vorhergehenden Ansprüche,
**dadurch gekennzeichnet,**
daß die Rasterung (7) als Rastelemente (8) nach innen ragende Noppen, insbesondere in Form von Halbkugeln oder Walzen oder Quadern aufweist.

8. Behälter nach einem der vorhergehenden Ansprüche,
**dadurch gekennzeichnet,**
daß die Rasterung (7) sich auf einer Mantellinie (M) des Körpers (3) befinden.

9. Behälter nach einem der vorhergehenden Ansprüche,
**dadurch gekennzeichnet,**
daß die Rasterung (7) sich im Verbindungsbereich befindet.

10. Behälter nach einem der vorhergehenden Ansprüche,
**dadurch gekennzeichnet,**
daß wenigstens die dem Verbindungsbereich gegenüberliegende Innenseite der Körperwand (4) glatt ist.

11. Behälter nach wenigstens einem der vorhergehenden Ansprüche,
**dadurch gekennzeichnet,**
daß die Rastelemente (8) als nach unten zur Griffplatte (5) gerichtete, den Formwiderstand erhöhende Haken ausgebildet sind.

## Claims

1. Squeezable container for ice-cream, in particular water-ice, having a body which tapers downwards in the manner of a V from a container opening and of which the squeezable body wall consists of a flexible, but stiff material and, for forming a bottom body end, is shaped to give a planar grip plate, characterized in that the body (3) has a V-angle α of 5° with respect to the centre axis (m) of the body, and arranged along a surface line (M) extending in the longitudinal direction of the body is a groove arrangement (6), of which the grooves run transversely with respect to the surface line (M).

2. Container according to Claim 1, characterized in that the groove arrangement (6) is arranged on the outer side and/or inner side of the body wall (4).

3. Container according to Claim 1 or 2, characterized in that the groove arrangement (6) extends from the grip plate (5) as far as the body opening (2).

4. Container according to one of Claims 1 to 3, characterized in that the groove depth of the groove arrangement (6) decreases in the direction of the body opening (2).

5. Container according to one of the preceding claims, characterized in that the body (3) comprises a rolled blank which overlaps in a connection region, and the groove arrangement (6) is located in the connection region.

6. Container according to one of the preceding claims, characterized in that a catch arrangement (7) is located on the inner side of the body wall (4).

7. Container according to one of the preceding claims, characterized in that the catch arrangement (7) has, as catch elements (8), inwardly projecting protrusions, in particular in the form of hemispheres or cylinders or cuboids.

8. Container according to one of the preceding claims, characterized in that the catch arrangement (7) is located on a surface line (M) of the body (3).

9. Container according to one of the preceding claims, characterized in that the catch arrangement (7) is located in the connection region.

10. Container according to one of the preceding claims, characterized in that at least the inner side of the body wall (4), located opposite the connection region, is smooth.

11. Container according to at least one of the preceding claims, characterized in that the catch elements (8) are designed as hooks which are directed downwards towards the grip plate (5) and increase the form resistance.

## Revendications

1. Récipient compressible pour glaces et en particulier pour glaces à l'eau, constitue d'un corps en forme de V de l'orifice vers le bas, dont la paroi compressible se compose d'un matériau souple mais cependant consistant et qui est façonné en sa partie inférieure de manière à offrir une surface de prise plate, caractérisé en ce que le corps (3) présente un angle d'ouverture α de 5° par rapport à son axe médian (m) et en ce que, le long de la génératrice (M), s'étendant dans le sens de la longueur du corps est disposée une cannelure (6) dont les rainures partent transversalement à la génératrice M.

2. Récipient selon la revendication 1, caractérisé en ce que la cannelure (6) est disposée sur la paroi extérieure et/ou la face interne de la paroi (4).

3. Récipient selon la revendication 1 ou 2, caractérisé en ce que la cannelure (6) s'étend de la surface de prise (5) jusqu'à l'orifice du corps (2).

4. Récipient selon l'une des revendications 1 à 3, caractérisé en ce que la profondeur de rainure de la cannelure (6) diminue en direction de l'orifice du corps (2).

5. Récipient selon l'une des revendications précédentes, caractérisé en ce que le corps (3) se compose d'une pièce roulée dont les bords se chevauchent pour former une zone de raccordement, et en ce que la cannelure (6) se situe dans la zone de raccordement.

6. Récipient selon l'une des revendications précédentes, caractérisé en ce que la face interne de la paroi (4) possède un dispositif de retenue (7).

7. Récipient selon l'une des revendications précédentes, caractérisé en ce que le dispositif de retenue (7) présente comme éléments de retenue (8) des boutons saillants rentrant vers l'intérieur, en particulier sous forme de demi-sphères ou parallélépipèdes ou cylindres.

8. Récipient selon l'une des revendications précédentes, caractérisé en ce que le dispositif de retenue (7) se situe sur la génératrice (M) du corps (3).

9. Récipient selon l'une des revendications précédentes, caractérisé en ce que le dispositif de retenue (7) se situe dans la zone de raccordement.

10. Récipient selon l'une des revendications précédentes, caractérisé en ce qu'au moins la face interne de la paroi (4) opposée à la zone de raccordement est lisse.

11. Récipient selon l'une au moins des revendications précédentes, caractérisé en ce que les éléments de retenue (8) sont constitués d'ergots améliorant la résistance résiduaire, orientés vers le bas, vers la surface de prise (5).
